# EUROPÄISCHE PATENTSCHRIFT

(11) **EP 3 013 918 B1**
(45) Veröffentlichungstag und Bekanntmachung des Hinweises auf die Patenterteilung: **25.12.2019**
(21) Anmeldenummer: 14732534.4
(22) Anmeldetag: 16.06.2014
(51) Int. Cl.: C09J 175/04, C08G 18/48, C08G 18/32, C08G 18/36, C09J 175/06

(54) **HYDROPHOBER POLYURETHANKLEBSTOFF**
HYDROPHOBIC POLYURETHANE ADHESIVE
ADHÉSIF POLYURÉTHANE HYDROPHOBE

(30) Priorität: 25.06.2013 EP 13173574
(43) Veröffentlichungstag der Anmeldung: 04.05.2016
(73) Patentinhaber: BASF SE, 67056 Ludwigshafen am Rhein (DE)
(72) Erfinder: ELING, Berend, 49448 Lemförde (DE); REESE, Hans-Jürgen, 49451 Holdorf (DE); KÖNIG, Christian, 68165 Mannheim (DE); BOLZE, Patrick, 49076 Osnabrück (DE)
(74) Vertreter: BASF IP Association
(86) Internationale Anmeldenummer: PCT/EP2014/062493
(87) Internationale Veröffentlichungsnummer: WO 2014/206779

(56) Entgegenhaltungen:
- EP-A1- 1 923 417
- EP-A1- 1 997 616
- EP-A1- 2 468 789

## Beschreibung

Die vorliegende Erfindung betrifft einen Polyurethanklebstoff enthaltend eine Isocyanatkomponente A und eine Polyolkomponente B wobei die Isocyanatkomponente A mindestens ein Diisocyanat oder Polyisocyanat und die Polyolkomponente B das Alkoxylierungsprodukt einer Mischung aus Ricinusöl oder Ricinolsäure (i), einem aromatischen Di- oder Polyol (ii) und einer OH-funktionellen Verbindung mit aliphatisch gebundenen OH-Gruppen und einer OH-Funktionalität von 1 bis 8 (iii) sowie gegebenenfalls einer Verbindung (iv), ausgewählt aus der Gruppe, bestehend aus cyclischen Anhydriden von Dicarbonsäuren und gegebenenfalls einer Verbindung (v), ausgewählt aus der Gruppe, bestehend aus cyclischen Mono- oder Diestern, enthält. Weiter betrifft die vorliegende Erfindung ein Verfahren zum Verkleben unter Einsatz des erfindungsgemäßen Polyurethanklebstoffs, einen unter Einsatz des Polyurethanklebstoffs verklebten Artikel und die Verwendung dieses Artikels beim Bau von Windkraftanlagen.

Polyurethanklebstoffe auf Basis einer Isocyanatkomponente und einer Polyolkomponente, sogenannte zwei-Komponenten-Polyurethanklebstoffe sind bekannt und werden beispielsweise bei der Verklebung von Kunststoffen eingesetzt. Insbesondere wenn diese Polyurethanklebstoffe als strukturelle Klebstoffe eingesetzt werden, das heißt wenn tragende Konstruktionen zu verkleben sind, werden hohe Anforderungen an die Festigkeiten und Klebkräfte gestellt. Hohe Festigkeiten werden über hohe Vernetzungsdichten erhalten, welche üblicherweise durch Einsatz höherfunktioneller Isocyanate und gegenüber Isocyanaten reaktiven Verbindungen erreicht werden.

Solche tragenden Konstruktionen sind z.B. die Verklebung von faserverstärkten Bauteilen für Flügel oder andere Bauteile von Flugzeugen, von faserverstärkten Bauteilen von Booten und insbesondere von faserverstärkten Bauteilen zur Herstellung von Flügeln für Windkraftanlagen.

So ist nach WO 2006/084900 A2 eine zweikomponentige Polyurethanzusammensetzung bekannt, bei der ein Gemisches aus mindestens einem alkoxylierten aromatisches Diol sowie mindestens einem aliphatisches Triol und einer Polyisocyanatkomponente, die mindest ein Polyisocyanat enthält, eingesetzt wird.

Insbesondere bei der Herstellung großflächiger Sandwichstrukturen, wie beispielsweise bei der Herstellung von Windflügeln für Windkraftanlagen, ist es erforderlich, dass die Klebstoffe nach dem Vermischen der Polyol- und der Isocyanatkomponente noch lange verarbeitbar sind. Um Nebenreaktionen des Isocyanats, beispielsweise mit Luftfeuchtigkeit zu vermeiden, die zu einer Verkürzung der offenen Zeit und Verschlechterung der mechanischen Eigenschaften des ausgehärteten Klebstoffs führt, werden die Klebstoffe durch den Einsatz hydrophober Komponenten so eingestellt, dass kein Wasser aus der Luft von der Klebstoffzusammensetzung aufgenommen wird und solche Nebenreaktionen dadurch unterdrückt werden.

So offenbart WO 2009080740 einen Zweikomponenten-Polyurethanklebstoff, der aus einer Isocyanatkomponente und einer Polyolkomponente besteht, wobei die Polyolkomponente ein hochmolekulares Polyesterdiol, ein hochfunktionelles Polyol sowie hydrophobe Polyole, vorzugsweise ausgewählt aus Polycarbonatpolyolen, Polybutadienpolyolen oder oleochemischen Polyolen, wie insbesondere Ricinusöl, enthält.

Nachteilig ist die trotz Hydrophobie noch unzureichende Haftfestigkeit sowie durch den Polyesterdioleinsatz verminderte Chemikalienbeständigkeit insbesondere im alkalischen Bereich. Des Weiteren ist an der Lösung nach WO 2009/080740 A1 nachteilig, dass aufgrund der vorgeschlagenen Zusammensetzung die für zahlreiche Verklebungen geforderten hohen Festigkeiten und hohen E-Module nicht erreicht werden können.

EP 2468789 offenbart einen zweikomponentigen Polyurethanklebstoff, wobei die Polyolkomponente Ricinusöl, mindestens ein aromatisches Diol und mindestens ein Polyol mit 5 bis 8 Hydroxygruppen umfasst.

Diese Klebstoffe sind bezüglich deren mechanischer Eigenschaften noch verbesserungswürdig. Insbesondere Zugfestigkeit, Bruchdehnung und E-Modul sowie die Zugscherfestigkeit sind wesentliche Eigenschaften bei der Herstellung struktureller Verklebungen. Darüber hinaus ist es insbesondere bei der strukturellen Verklebung von Flügeln für Windkraftanlagen erforderlich, dass der Klebstoff eine hohe Erweichungstemperatur aufweist, da die strukturellen Verklebungen, beispielsweise durch Sonneneinstrahlung, erhöhten Temperaturen ausgesetzt sind. Neben der Sonneneinstrahlung verursacht auch die mechanische Beanspruchung der Bauteile eine nicht unerhebliche Wärmeentwicklung. So fordert beispielsweise der Germanische Lloyd für strukturelle Klebstoffe im Bau von Windkraftanlagen eine Wärmeformbeständigkeit von mindestens 65 °C.

Ein weiterer Nachteil der Klebstoffe aus dem Stand der Technik ist eine gewisse Streuung der mechanischen Eigenschaften in Abhängigkeit von der erhaltenen Charge. Ursache hierfür sind geringfügige Änderungen in der Zusammensetzung des Naturprodukts Ricinusöl.

Aufgabe der vorliegenden Erfindung war es daher einen Polyurethanklebstoff zu liefern, der im ausgehärteten Zustand sehr gute mechanische Eigenschaften, insbesondere Zugfestigkeit, Bruchdehnung, E-Modul und Zugscherfestigkeit aufweist und zu möglichst einheitlichen Verklebungen führt, unabhängig von der hergestellten Produktcharge. Weiter war es Aufgabe der vorliegenden Erfindung einen Polyurethanklebstoff zu liefern, der neben den hervorragenden mechanischen Eigenschaften im Ausgehärteten Zustand eine Glasübergangstemperatur von mehr als 60 °C aufweist.

Diese Aufgabe wird gelöst durch einen Polyurethanklebstoff enthaltend eine Isocyanatkomponente A und eine Polyolkomponente B wobei die Isocyanatkomponente A mindestens ein Diisocyanat oder Polyisocyanat und die Polyolkomponente B das Alkoxylierungsprodukt einer Mischung aus Ricinusöl oder Ricinolsäure (i), einem aromatischen Di- oder Polyol (ii) und einer OH-funktionellen Verbindung mit aliphatisch gebundenen OH-Gruppen und einer OH-Funktionalität von 1 bis 8 Polyol (iii) sowie gegebenenfalls einer Verbindung (iv), ausgewählt aus der Gruppe, bestehend aus cyclischen Anhydriden von Dicarbonsäuren und gegebenenfalls einer Verbindung (v), ausgewählt aus der Gruppe, bestehend aus cyclischen Mono- oder Diestern, enthält.

Die Polyisocyanatkomponente A enthält mindestens ein Diisocyanat oder Polyisocyanat. Diese umfassen alle zur Herstellung von Polyurethanen bekannten aliphatischen, cycloaliphatischen und aromatischen zwei- oder mehrwertigen Isocyanate sowie beliebige Mischungen daraus. Beispiele sind 4,4'-Methandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polymer-MDI), Tetramethylendiisocyanat, Hexamethylendiisocyanat (HDI), die Mischungen aus Hexamethylendiisocyanaten und höherkernigen Homologen des Hexamethylendiisocyanats (Mehrkern-HDI), Isophorondiisocyanat (IPDI), 2,4- oder 2,6-Toluylendiisocyanat (TDI) oder Mischungen der genannten Isocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten. Die Isocyanate können auch modifiziert sein, beispielsweise durch Einbau von Uretdion-, Carbamat-, Isocyanurat-, Carbodiimid-, Allophanat- und insbesondere Urethangruppen.

Dabei können als Di- und Polyisocyanate auch isocyanatgruppenhaltige Isocyanatprepolymere eingesetzt werden. Diese Polyisocyanatprepolymere sind erhältlich, indem vorstehend beschriebene Di- und Polyisocyanate, beispielsweise bei Temperaturen von 30 bis 100 °C, bevorzugt bei etwa 80 °C, mit Polyolen zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole, die zur Herstellung von Isocyanatprepolymeren eingesetzt werden können, sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole zur Herstellung von Isocyanatprepolymeren Polyole eingesetzt, die auch unter der Polyolkomponente B beschrieben werden. Insbesondere werden in der Polyisocyanatkomponente A keine Polyisocyanatprepolymere eingesetzt.

Besonders bevorzugt werden als Di und Polyisocyanate Mischungen aus Diphenylmethandiisocyanat und Polyphenylenpolymethylenpolyisocyanaten eingesetzt.

Die Polyolkomponente enthält das Alkoxylierungsprodukt einer Mischung aus Ricinusöl oder Ricinolsäure (i), einem aromatischen Di- oder Polyol (ii) und einer OH-funktionellen Verbindung mit aliphatisch gebundenen OH-Gruppen und einer OH-Funktionalität von 1 bis 8 (iii) sowie gegebenenfalls einer Verbindung (iv), ausgewählt aus der Gruppe, bestehend aus cyclischen Anhydriden von Dicarbonsäuren und gegebenenfalls einer Verbindung (v), ausgewählt aus der Gruppe, bestehend aus cyclischen Mono- oder Diestern.

Die Alkoxylierung erfolgt dabei vorzugsweise indem die Mischung aus Ricinusöl oder Ricinolsäure (i), einem aromatischen Di- oder Polyol (ii) und einer OH-funktionellen Verbindung mit aliphatisch gebundenen OH-Gruppen und einer OH-Funktionalität von 1 bis 8 (iii) sowie gegebenenfalls einer Verbindung (iv), ausgewählt aus der Gruppe, bestehend aus cyclischen Anhydriden von Dicarbonsäuren und gegebenenfalls einer Verbindung (v), ausgewählt aus der Gruppe, bestehend aus cyclischen Mono- oder Diestern mit Hilfe eines nucleophilen und/oder basischen Katalysators und mindestens einem Alkylenoxid. Dabei wird vorzugsweise die Mischung der Komponenten (i) bis (iii) und gegebenenfalls (iv) und (v) vor Zugabe des Alkylenoxids in einem Reaktionsgefäß vorgelegt. Als Alkylenoxyd können beispielsweise 1,2-Butylenoxid, Propylenoxid oder Ethylenoxid eingesetzt werden. Dabei enthält das Alkylenoxid vorzugsweise Propylenoxid, besonders bevorzugt besteht das Alkylenoxyd aus Propylenoxid.

Der basische und/oder nucleophile Katalysator kann ausgewählt sein aus der Gruppe, bestehend aus Alkalimetall- oder Erdalkalimetallhydroxide, Alkalimetall- oder Erdalkalimetallalkoxide, tertiäre Amine, N-heterocyclische Carbene oder Vorläufer N-heterocyclische Carbene.

Bevorzugt ist der basische und/oder nucleophile Katalysator ausgewählt ist aus der Gruppe enthaltend tertiäre Amine.

Besonders bevorzugt ist der basische und/oder nucleophile Katalysator ausgewählt aus der Gruppe enthaltend Imidazol und Imidazolderivate, ganz besonders bevorzugt Imidazol.

In einer anderen bevorzugten Ausführungsform ist der basische und/oder nucleophile Katalysator ausgewählt aus der Gruppe enthaltend N-heterocyclische Carbene, besonders bevorzugt aus der Gruppe enthaltend N-heterozyklische Carbene auf Basis N-alkyl- und N-arylsubstituierter Imidazolylidene.

In einer bevorzugten Ausführungsform ist der basische und/oder nucleophile Katalysator ausgewählt aus der Gruppe umfassend Trimethylamin, Triethylamin, Tripropylamin, Tributylamin, N,N'-Dimethylethanolamin, N,N'-Dimethylcyclohexylamin, Dimethylethylamin, Dimethylbutylamin, N,N'-Dimethylanilin, 4-Dimethylaminopyridin, N,N'-Dimethylbenzylamin, Pyridin, Imidazol, N-Methylimidazol, 2-Methylimidazol, 1,2 Dimethylimidazol, N-(3-Aminopropyl)imidazol), 4-Methylimidazol, 5-Methylimidazol, 2-Ethyl-4-methylimidazol, 2,4-Dimethylimidazol, 1-Hydroxypropylimidazol, 2,4,5-Trimethylimidazol, 2-ethylimidazol, 2-Ethyl-4-methylimidazol, N-Phenylimidazol, 2-Phenylimidazol, 4-Phenylimidazol, Guanidin, alkylierte Guanidine, 1,1,3,3-Tetramethylguanidin, Piperazin, alkyliertem Piperazine, Piperidin, alkyliertem Pipiridin, 7-Methyl-1,5,7-triazabicyclo[4.4.0]dec-5-en, 1,5-Diazobicylco[4.3.0]-non-5-en, 1,5-Diazabicylo[5.4.0]undec-7-en, bevorzugt Imidazol und Dimethylethanolamin (DMEOA).

Die genannten Katalysatoren können allein oder in beliebigen Mischungen zueinander eingesetzt werden.

Die Umsetzung mit Alkylenoxid erfolgt üblicherweise bei Temperaturen im Bereich zwischen 80 und 200°C, vorzugsweise zwischen 100°C und 160°C, besonders bevorzugt zwischen 110°C und 150°C.

Wenn tertiäre Amine und/oder N-heterozyklische Carbene als Katalysatoren für die Umsetzung mit Alkylenoxiden verwendet werden, liegt die Katalysatorkonzentration bezogen auf die Masse der Verbindungen (i) bis (iii) und, falls vorhanden (iv) und (v) zwischen 50 - 5000 ppm, bevorzugt zwischen 100 und 1000 ppm, und der Katalysator muss nach der Umsetzung nicht aus dem Reaktionsprodukt entfernt werden.

Ricinusöl (i) ist ein nachwachsender Rohstoff und wird aus den Samen der Ricinusstaude gewonnen. Im Wesentlichen ist Ricinusöl ein Triglycerid einer Fettsäuremischung, enthaltend, bezogen auf das Gesamtgewicht der Fettsäuremischung > 75 Gew.-% Ricinolsäure, 3 bis 10 Gew.-% Ölsäure, 2 bis 6 Gew.-% Linolsäure, 1 bis 4 Gew.-% Stearinsäure, 0 bis 2 Gew.-% Palmitinsäure sowie gegebenenfalls geringe Mengen von jeweils weniger als 1 Gew.-% weiterer Fettsäuren, wie Linolensäure, Vaccensäure, Archinsäure, und Eicosensäure. Alternativ kann ein Teil von Ricinusöl auch durch Ricinolsäure ersetzt werden. Dabei beträgt der Anteil von Ricinolsäure vorzugsweise nicht mehr als 40 Gew.-%, besonders bevorzugt 20 Gew.-%, mehr bevorzugt 10 Gew.-% und insbesondere 5 Gew.-%, jeweils bezogen auf das Gesamtgewicht der Komponente (i). Der Anteil der Komponente (i) an dem Gesamtgewicht der zu alkoxylierenden Mischung beträgt vorzugsweise 30 bis 90 Gew.-%, besonders bevorzugt 40 bis 85 Gew.-% und insbesondere 45 bis 80 Gew.-%, jeweils bezogen auf das Gesamtgewicht der Komponenten (i) bis (iii) und falls vorhanden (iv) und (v).

Weiter kann die zu alkoxylierende Mischung neben Ricinusöl und Ricinolsäure (i) weitere Triglyceride von Fettsäuren, wie Tran, Talg, Sojaöl, Rapsöl, Olivenöl, Sonnenblumenöl, hydroxylgruppenmodifiziertes Sojaöl, Palmöl, und derivatisiertes Rizinusöl, sowie von diesen Triglyceriden abgeleitete Fettsäuren oder Mischungen dieser Substanzen enthalten.

Auch können der zu alkoxylierenden Mischung mit Hydroxylgruppen modifizierten Öle zugegeben werde. Die Modifizierung der Öle, das heißt der Fettsäuretriglyceride oder der Fettsäuren, kann über die allgemein bekannten Verfahren wie zum Beispiel über Hydroformylierung/Hydrierung oder Epoxidierung/Ringöffnung, Ozonolyse, Direktoxidation oder Lachgasoxidation/Reduktion erfolgen.

Dabei beträgt der Anteil von Ricinusöl und Ricinolsäure (i) am Gesamtgewicht der in der zu alkoxylierenden Mischung enthaltenen Triglyceride und Fettsäuren vorzugsweise mindestens 50 Gew.-%, besonders bevorzugt mindestens 70 Gew.-% und insbesondere mindestens 80 Gew.-%.

Als aromatisches Di- oder Polyol (ii) wird eine Verbindung eingesetzt, die mindestens zwei aromatisch gebundene Hydroxylgruppen enthält. Alternativ kann als aromatisches Di- oder Polyol auch ein Di- oder Polyol eingesetzt werden, das durch Alkoxylierung eines aromatischen Di- oder Polyols erhalten wurde, wobei dies weniger bevorzugt ist. Wird ein Alkoxylierungsprodukt eines aromatischen Polyols als Komponente (ii) eingesetzt, muss die Hydroxylzahl des aromatischen Di- oder Polyols größer als 350 mg KOH/g, vorzugsweise größer als 400 mg KOH/g und besonders bevorzugt größer als 450 mg KOH/g sein. Vorzugsweise enthält das aromatische Diol mindestens zwei Phenolgruppen, besonders bevorzugt enthält das aromatische Diol (ii) ein Bisphenol, weiter bevorzugt ist das aromatische Di- oder Polyol ein Bisphenol.

Bisphenole sind Verbindungen mit zwei Hydroxyphenylgruppen. Diese umfassen Bisphenol A (2,2-Bis(4-hydroxyphenyl)propan); Bisphenol AF (1,1-Bis(4-hydroxyphenyl)-1-phenylethan), Bisphenol AP (1,1-Bis(4-hydroxyphenyl)-1-phenylethan), Bisphenol B (2,2-Bis(4-hydroxyphenyl)butan), Bisphenol BP (Bis-(4-hydroxyphenyl)diphenylmethan), Bisphenol C (2,2-Bis(3-methyl-4-hydroxyphenyl)propan), Bisphenol E (1,1-Bis(4-hydroxyphenyl)ethan), Bisphenol F (Bis(4-hydroxyphenyl)methan), Bisphenol FL (9,9-Bis(4-hydroxyphenyl)fluoren), Bisphenol G (2,2-Bis(4-hydroxy-3-isopropyl-phenyl)propan), Bisphenol M (1,3-Bis(2-(4-hydroxyphenyl)-2-propyl)benzol), Bisphenol P (1,4-Bis(2-(4-hydroxyphenyl)-2-propyl)benzol), Bisphenol PH (2,2-[5,5'-Bis[1,1'-(biphenyl)-2-ol]]propan), Bisphenol S (Bis(4-hydroxyphenyl)sulfon), Bisphenol TMC (1,1-Bis(4-hydroyphenyl)-3,3,5-trimethyl-cyclohexan) oder Bisphenol Z (1,1-Bis(4-hydroxyphenyl)-cyclohexan), besonders bevorzugt sind Bisphenol A und Bisphenol S, insbesondere Bisphenol A.

In einer besonders bevorzugten Ausführungsform ist das aromatische Di- oder Polyol (ii) Bisphenol A oder Bisphenol S, insbesondere Bisphenol A. Der Anteil der Komponente (ii) an dem Gesamtgewicht der zu alkoxylierenden Mischung beträgt vorzugsweise 4 bis 30 Gew.-%, besonders bevorzugt 5 bis 25 Gew.-% jeweils bezogen auf das Gesamtgewicht der Komponenten (i) bis (iii) und falls vorhanden (iv) und (v).

Als aliphatische einer OH-funktionellen Verbindung mit aliphatisch gebundenen OH-Gruppen und einer OH-Funktionalität von 1 bis 8 (iii) kommen Verbindungen in Betracht, die eine bis 8 aliphatisch gebundene Hydroxygruppen aufweisen, wobei Verbindungen, die unter die Definition von Komponente (ii) fallen, nicht als Verbindungen der Komponente (iii) verstanden werden sollen. Beispiele sind Wasser, Propylenglykol, Ethylenglykol, Diethylenglykol, Dipropylenglykol, Neopentylglykol, 1,2-Butandiol, 1,3-Butandiol, 1,4-Butandiol, Hexandiol, Pentandiol, 3-Methyl-1,5-pentandiol, 1,12-Dodecandiol, monofunktionelle Alkohole, wie Ethanol und Propanol, Glycerin, Trimethylolpropan, Pentaerythritol, 1,2,4- oder 1,3,5-Trihydroxy-cyclohexan, Sorbitol und Saccharose sowie Umsetzungsprodukte solcher Verbindungen mit Alkylenoxiden wie Propylenoxid oder Ethylenoxid sowie Mischungen hieraus. Weiter kann die Komponente (iii) auch OH-Gruppen enthaltende Ester und/oder Polyester enthalten. Ester und Polyester werden vorzugsweise erhalten aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure und insbesondere Adipinsäure. Beispiele für zwei und mehrwertige Alkohole, insbesondere Diole sind Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure. Die Herstellung des Esters bzw. Polyesters erfolgt auf bekannte Art und Weise.

Dabei weist die Komponente (iii) vorzugsweise eine OH-Zahl von mindestens 50, besonders bevorzugt mindestens 200 und insbesondere mindestens 600 mg KOH/g auf. Besonders bevorzugt weisen Verbindungen, die als aliphatisches Polyol (iii) eingesetzt werden 5 bis 8 OH-Gruppen auf. Ein besonders bevorzugtes Beispiel für eine Verbindung der Komponente (iii) ist ein Zucker, insbesondere Saccharose oder Sorbitol, besonders bevorzugt Saccharose.

Der Anteil der Komponente (iii) an dem Gesamtgewicht der zu alkoxylierenden Mischung beträgt vorzugsweise 2 bis 40 Gew.-%, besonders bevorzugt 3 bis 25 Gew.-% uns insbesondere 4 bis 20 Gew.-%, jeweils bezogen auf das Gesamtgewicht der Komponenten (i) bis (iii) und falls vorhanden (iv) und (v).

Als Verbindung (iv), die gegebenenfalls eingesetzt werden kann, wird eine Verbindung, ausgewählt aus der Gruppe, bestehend aus cyclischen Anhydriden von Dicarbonsäuren, eingesetzt. Vorzugsweise sind die Anhydride der Dicarbonsäure ausgewählt aus der Gruppe enthaltend a) Alkenylbernsteinsäureanhydride, b) Phthalsäureanhydrid, c) Maleinsäureanhydrid, d) Bernsteinsäureanhydrid sowie e) Tetrahydrophthalsäureanhydrid und Mischungen daraus.

Die Alkenylbernsteinsäureanhydride a) sind dabei bevorzugt ausgewählt aus der Gruppe der C12-C20-alkylkettensubstituierten Bernsteinsäureanhydride und der Poly(isobutylen)bernsteinsäureanhydride mit Molekulargewicht zwischen 500 und 2000 g/mol. Das mindestens eine Alkenylbernsteinsäureanhydrid a) ist in einer Ausführungsform des erfindungsgemäßen Verfahrens bevorzugt ausgewählt aus der Gruppe enthaltend C18- und/oder C16-Alkenylbernsteinsäureanhydride, Poly(isobutylen)bernsteinsäureanhydrid und Mischungen hieraus.

Der Anteil der Komponente (iv) an dem Gesamtgewicht der zu alkoxylierenden Mischung beträgt vorzugsweise 0 bis 30 Gew.-%, besonders bevorzugt 2 bis 25 Gew.-% uns insbesondere 4 bis 20 Gew.-%, jeweils bezogen auf das Gesamtgewicht der Komponenten (i) bis (iii) und falls vorhanden (iv) und (v).

Als Verbindung (v), die gegebenenfalls eingesetzt werden kann, wird eine Verbindung, ausgewählt aus der Gruppe, bestehend ausgewählt aus der Gruppe, bestehend aus cyclischen Mono- oder Diestern eingesetzt. Dabei ist die Verbindung (v) bevorzugt ausgewählt aus der Gruppe enthaltend γ-Butyrolacton, δ-Valerolacton, ε-Caprolacton, (R,R)-Lactid, (S,S)-Lactid, meso-Lactid, sowie Mischungen daraus; besonders bevorzugt ist als Verbindung (v) ε-Caprolacton.

Der Anteil der Komponente (v) an dem Gesamtgewicht der zu alkoxylierenden Mischung beträgt vorzugsweise 0 bis 30 Gew.-%, besonders bevorzugt 2 bis 25 Gew.-% uns insbesondere 4 bis 20 Gew.-%, jeweils bezogen auf das Gesamtgewicht der Komponenten (i) bis (iii) und falls vorhanden (iv) und (v).

Üblicherweise wird die Alkoxylierung der Mischung der Komponenten (i) bis (iii) und, falls vorhanden (iv) und (v) mit der entsprechenden Menge Alkylenoxid durchgeführt, bis eine OH-Zahl von 80 bis 800 mg KOH/g, vorzugsweise 150 bis 600 mg KOH/g und besonders bevorzugt 200 bis 500 mg KOH/g eingestellt ist.

Neben dem Alkoxylierungsprodukt der Komponente (i) bis (iii) und, falls vorhanden (iv) und (v) können noch weitere, in der Polyurethanchemie übliche, gegenüber Isocyanat reaktive Gruppen aufweisende Verbindungen, wie Polyole und Kettenverlängerer und Vernetzer eingesetzt werden. Solche sind beispielsweise beschrieben im "Kunststoffhandbuch, Band 7, Polyurethane", Carl Hanser Verlag, 3. Auflage 1993, Kapitel 3.1 und 3.4.3, und speziell für Polyurethanklebeanwendungen in "The polyurethanes book", Wiley, 2002, Kapitel 23 und 25. Diese enthalten vorzugsweise ausschließlich OH-Gruppen als gegenüber Isocyanat reaktive Gruppen und werden vorzugsweise eingesetzt in Mengen von kleiner 90 Gew.-%, besonders bevorzugt kleiner 50 Gew.-%, mehr bevorzugt kleiner 30 Gew.-% noch mehr bevorzugt kleiner 10 Gew.-% und insbesondere kleiner als 1 Gew.-%, bezogen auf das Gesamtgewicht aller Verbindungen mit gegenüber Isocyanaten reaktiven Gruppen in der Polyolkomponente B.

Die erfindungsgemäßen Polyurethanklebstoffe können noch weitere, bei der Herstellung übliche Additive, wie Lösungsmittel, Weichmacher, Füllstoffe, wie Ruße, Kreiden und Talke, Haftvermittler, insbesondere Siliziumverbindungen, wie Trialkoxysilane, Thixothropiermittel, wie amorphe Kieselsäuren und Trockenmittel, wie Zeolithe zugesetzt werden. Üblicherweise werden diese Zusatzstoffe zur Polyolkomponente der Polyolkomponente B zugegeben.

Weiter ist Gegenstand der vorliegenden Erfindung ein Verfahren zum Verkleben, bei dem man die Isocyanatkomponente A und die Polyolkomponente B eines erfindungsgemäßen Polyurethanklebstoffs mischt, den gemischten Polyurethanklebstoffs auf mindestens eine zu verklebende Substratoberfläche aufbringt, die Substratoberflächen innerhalb der offenen Zeit fügt und den Polyurethanklebstoff aushärten lässt. Dabei erfolgt das Vermischen vorzugsweise bei einem Isocyanatindex von 80 bis 200, besonders bevorzugt 90 bis 150, mehr bevorzugt 95 bis 120 und insbesondere 98 bis 110. Dabei wird unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden.

Ein erfindungsgemäßer Klebstoff weist dabei vorzugsweise eine lange offene Zeit von mindestens 30 Minuten bei Raumtemperatur auf. Dabei ist die Offene Zeit der Zeitraum vom Mischen der Polyisocyanatkomponente A und der Polyolkomponente B und anschließender Applikation des Klebstoffs das Fügen der Klebeteile noch möglich ist, bevor der Klebstoff soweit ausgehärtet ist, dass er nicht mehr zum Aufbau einer Klebeverbindung in der Lage ist.

Der erfindungsgemäße Polyurethanklebstoff kann als Strukturklebstoff, insbesondere zum Verkleben von Kunststoffteilen, vorzugsweise faserverstärkten Kunststoffteilen, eingesetzt werden. Anwendungen sind beispielsweise im Fahrzeugbau, beim Bau von Flugzeugen, insbesondere Tragflächen von Flugzeugen oder Windkraftanlagen, insbesondere Rotorblätter für Windkraftanlagen, und zeichnet sich durch hervorragende mechanische Eigenschaften und eine hohe Glasübergangstemperatur bei langer offener Zeit aus.

Ein Vorteil des erfindungsgemäßen Verfahrens besteht darin, dass sich mit dem Alkoxylierungsprodukt der Komponenten (i) bis (v) solche Verbindungen zu einem homogenen Reaktionsprodukt umsetzen lassen, die sich durch einen sehr großen Polaritätsunterschied auszeichnen und somit in reiner Form miteinander unverträglich sind. Durch die Umsetzung mit Alkylenoxid werden die miteinander unverträglichen Moleküle kompatibilisiert und es resultieren homogene Reaktionsprodukte, die sowohl Polyethereinheiten als auch Polyestereinheiten beinhalten. Bei der basenkatalysierten Alkoxilierung ist dies vermutlich auch, darauf zurückzuführen, dass im Prozess neben der Ringöffnungspolymerisation zeitgleich Umesterungsreaktionen stattfinden, die die homogene Verteilung der estertragenden Molekülketten mit den ethertragenden Molekülketten gewährleistet. Somit werden Polyurethanklebstoffe mit hervorragenden Eigenschaften, sowohl bei der Verarbeitung als ach hervorragenden mechanischen Eigenschaften des Klebstoffs selbst, erhalten.

Im Folgenden soll die Erfindung anhand von Beispielen verdeutlicht werden.

Eingesetzte Rohstoffe:
Polyol1: Sovermol® 805, ein Gemisch aus Rizinusöl und einem Ketonharz in ein Mischverhältnis von etwa 80/20 Gewichtsteilen, mit einer OH Zahl von 173 mg KOH/g, kommerziell erhältlich von der BASF SE
Polyol 2: Ein Sucrose/Glyzerin haltiges Propoxylat mit einer OH Zahl von 490 mg KOH/g und eine mitteleren Funktionolität von 4,3
Polyol 3: Propoxylat, ausgehend von Bisphenol A als Starter mit einer OH Zahl von 280 mg KOH/g.
Iso 1: Polymer-MDI mit einer Funktionalität von ca. 2,7 und einem NCO-Gehalt von 31,5 Gew.-%, erhältlich unter dem HandelsnamenLupranat® M20 von der BASF SE.
Wasserfänger: Zeolitischer Wasserfänger, dispergiert in Ricinusöl (50 Gew.-%)

### Polyolsynthesebeispiele

### Polyolsynthesebeispiel 1 (Synthese 1):

175,2 g Glycerin, 0,5 g Imidazol, 275,45 g Sorbitol sowie 425,1 g Bisphenol A und 2751,7g Rizinusöl (FSG Qualität) wurden bei 25 °C in einen 5 L Reaktor vorgelegt. Anschließend wurde dieser mit Stickstoff inertisiert. Der Kessel wurde auf 150 °C erhitzt und 1372,1 g Propylenoxid zu dosiert. Nach einer Abreaktionszeit von 11 h wurde für 40 Minuten unter vollem Vakuum bei 100 °C evakuiert und anschließend auf 25 °C abgekühlt. Es wurden 4933 g Produkt erhalten.

Der erhaltene Polyetherester besaß folgende Kennwerte:
OH-Zahl: 300,2 mg KOH/g
Viskosität (25 °C): 2021 mPas
Säurezahl: kleiner 0,01 mg KOH/g
Wassergehalt: 0,02 Gew.-%
Restgehalt Bisphenol A: kleiner 10 mg/kg per HPLC bestimmt

### Polyolsynthesebeispiel 2 (Synthese 2):

5,7 g Glycerin, 0,02 g Imidazol, 14,5 g Sorbitol sowie 30,2 g Bisphenol A und 122,4 g Rizinusöl (FSG Qualität) wurden bei 25 °C in einen 300 mL Reaktor vorgelegt. Anschließend wurde dieser mit Stickstoff inertisiert. Der Kessel wurde auf 150 °C erhitzt und 67,2 g Propylenoxid zu dosiert. Nach einer Abreaktionszeit von 19 h wurde für 40 Minuten unter vollem Vakuum bei 100 °C evakuiert und anschließend auf 25 °C abgekühlt. Es wurden 225,9 g Produkt erhalten.

Der erhaltene Polyetherester besaß folgende Kennwerte:
OH-Zahl: 314,7 mg KOH/g
Mittlere OH-Funktionalität 3,2
Viskosität (25 °C): 3170 mPas
Säurezahl: kleiner 0,01 mg KOH/g
Wassergehalt: kleiner 0,04%
Restgehalt Bisphenol A: kleiner 10 mg/kg per HPLC bestimmt

### Polyolsynthesebeispiel 3 (Synthese 3):

3,4 g Glycerin, 0,02 g Imidazol, 22,3 g Saccharose sowie 36,0 g Bisphenol A und 112,4 g Rizinusöl (FSG Qualität) wurden bei 25 °C in einen 300 mL Reaktor vorgelegt. Anschließend wurde dieser mit Stickstoff inertisiert. Der Kessel wurde auf 130 °C erhitzt und 65,9 g Propylenoxid zu dosiert. Nach einer Abreaktionszeit von 10 h wurde für 40 Minuten unter vollem Vakuum bei 100 °C evakuiert und anschließend auf 25 °C abgekühlt. Es wurden 229,0 g Produkt erhalten.

Der erhaltene Polyetherester besaß folgende Kennwerte:
OH-Zahl: 310,6 mg KOH/g
Mittlere OH-Funktionalität 3,4
Viskosität (25 °C): 7786 mPas
Säurezahl: kleiner 0,01 mg KOH/g
Wassergehalt: kleiner 0,04%
Restgehalt Bisphenol A: kleiner 10 mg/kg per HPLC bestimmt??

### Polyolsynthesebeispiel 4 (Synthese 4; Vergleichsbeispiel ohne Bisphenol-A):

210,0 g Glycerin, 0,5 g Imidazol, 335,0 g Sorbitol sowie und 2749,7 g Rizinusöl (FSG Qualität) wurden bei 25 °C in einen 5000 mL Reaktor vorgelegt. Anschließend wurde dieser mit Stickstoff inertisiert. Der Kessel wurde auf 150 °C erhitzt und 1704,8 g Propylenoxid zu dosiert. Nach einer Abreaktionszeit von 4 h wurde für 60 Minuten unter vollem Vakuum bei 100 °C evakuiert und anschließend auf 25 °C abgekühlt. Es wurden 4982,5 g Produkt erhalten.

Der erhaltene Polyetherester besaß folgende Kennwerte:
OH-Zahl: 308,9 mg KOH/g
Viskosität (25 °C): 1287 mPas
Säurezahl: kleiner 0,01 mg KOH/g
Wassergehalt: kleiner 0,01%

### Verklebung und Herstellung einer Platte aus demselben Reaktionsgemisch:

### Verklebung:

Die Proben zur Bestimmung der Zugscherfestigkeit (Scherfestigkeit 0,5 mm) wurden in Anlehnung an die DIN EN 1465 "Bestimmung der Zugscherfestigkeit hochfester Überlappungsklebungen" hergestellt. Dazu wurden die Einsatzstoffe gemäß Tabelle 1 bei einem Isocyanatindex von 105 einem Speedmixer 90 sec bei 1600 U/min, dann 30 sec bei 2100 U/min vermischt. Anschließend wurde der Kleber auf eine glasfaserverstärke Epoxyplatte (Vetronit® EGS 619, 100x25x2mm, Firma Rocholl GmbH) aufgetragen. Anschließend wurde die Platte mit aufgetragenem Klebstoff im Klimaschrank bei 25°C und 70% Luftfeuchtigkeit für 60 min gelagert. Auf die so vorbehandelte Platte wurde eine zweite Platte aufgelegt. Die Klebschichtdicke beträgt dabei 0,5 mm. Die Verklebung wird mit einem Gewicht von 1 kg so lange belastet, bis der Klebstoff fast vollständig ausgehärtet ist. Danach wird der restliche Klebstoff entfernt und die verklebten Platten nochmal 2 h bei 80°C ausgehärtet. Die Zugscherkörper werden entsprechend der Norm DIN EN 1465 zugeschnitten und geprüft.

### Mechanik Platten 2 mm und 4 mm

Eine offene Form mit der gewünschten Tiefe (2mm oder 4 mm) wird in einem auf 80°C beheizten Trockenschrank für ca. 45min angewärmt. Die evakuierten Komponenten werden in einen Speedmixerbecher eingewogen und im Speedmixer 60s bei 1600U/min, dann 120s bei 2100 U/min vermischt. Nach Beendigung des Rührvorganges wird das Reaktionsgemisch in die Form gegeben und mit einem Rakel glatt gezogen. Die Platte wird für 2 h bei 80°C ausgehärtet. Die Prüfkörper werden anschließend aus den so hergestellten Platten ausgestanzt. Die mechanischen Kennwerte werden nach DIN EN ISO 527 an 2 mm dicken Prüfkörpern, und die Glasübergangstemperatur über Dynamische Differenz-Thermoanalyse (DSC) bei einer Heizrate von 20 K/min nach DIN EN ISO 11357 bestimmt.

### Bestimmung der offenen Zeit:

Die offene Zeit wird über eine Reaktionsviskositätsmessung wird in einem Rheometer mit Platte-Platte-Geometrie mit einem Durchmesser von 20mm und einer Spaltbreite von 1 mm bestimmt. Zur Herstellung der zu vermessenden Reaktionsmischung werden die Ausgangskomponenten gemäß Tabelle 1 bei einem Isocyanatindex von 105 5s bei 1600U/min im Speedmixer verrührt. Unmittelbar im Anschluss wird genügend Kleber auf die Messplatte gegeben, so dass die Geometrie vollständig gefüllt ist. Vor der Messung wird 10 Sekunden lang mit einer maximalen Scherrate von 100 s⁻¹. Vorgescheert und in der anschließenden Pause von 120 Sekunden wird überschüssiges Material entfernt. In der eigentlichen Messung wird bei einer Scherrate von 1 s-1 die Zeit bis zum Erreichen einer Viskosität von 400 Pas als offene Zeit bestimmt.

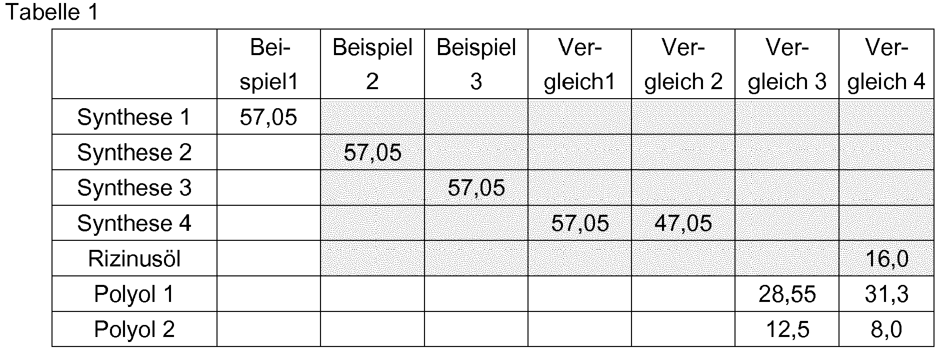

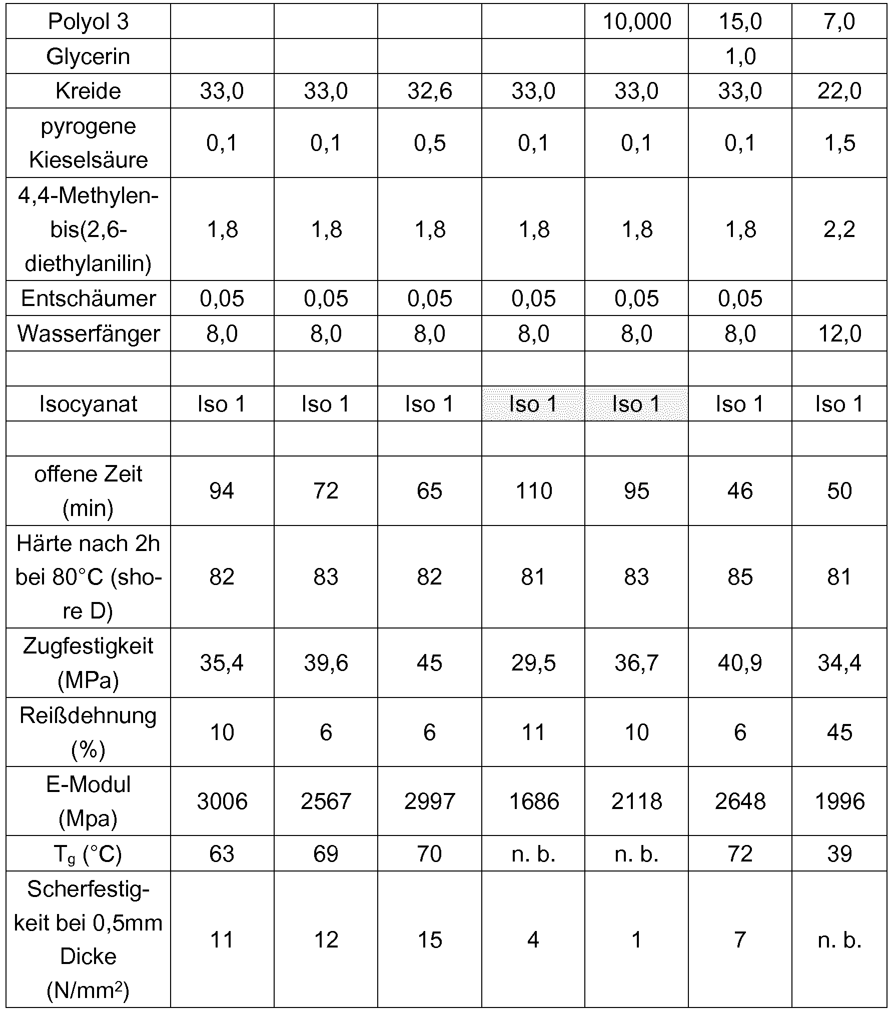

Tabelle 1 zeigt, dass durch den Einsatz erfindungsgemäßer Polyole Klebstoffe mit hervorragenden Eigenschaften, insbesondere einer Glastemperatur von größer 60 °C, einer Scherfestigkeit von mehr als 10 N/mm² und eine hohe Zugfestigkeit von mehr als 35 MPa erhalten werden. Dabei ist die Offene Zeit erfindungsgemäßer Klebstoffe größer als 60 Minuten und erlaubt daher auch die Verklebung großflächiger Strukturen, wie beispielsweise Windflügel von Windkraftanlagen. Im Gegensatz dazu führt der Einsatz fertiger Polyole auf Basis von Bisphenol A, einem 5-funktionellen Starter und Ricinusöl, wie beispielsweise in EP 2468789 beschrieben, zu entweder zu geringen Glastemperaturen (Vergleich 4) oder zu zu geringen Scherfestigkeiten (Vergleich 3). Auch das Weglassen von Bisphenol A im Synthesepolyol (Vergleich 1) oder die getrennte Zugabe von Bisphenol-A-Polyol zu einem Synthesepolyol ohne Bisphenol A (Vergleich 2) führt zu Klebstoffen mit ungenügenden Scherfestigkeiten.

## Patentansprüche

1. Polyurethanklebstoff enthaltend eine Isocyanatkomponente A und eine Polyolkomponente B wobei die Isocyanatkomponente A mindestens ein Diisocyanat oder Polyisocyanat und die Polyolkomponente B das Alkoxylierungsprodukt einer Mischung aus Ricinusöl oder Ricinolsäure (i), einem aromatischen Di- oder Polyol (ii) und einer OH-funktionellen Verbindung mit aliphatisch gebundenen OH-Gruppen und einer OH-Funktionalität von 1 bis 8 (iii) sowie gegebenenfalls einer Verbindung (iv), ausgewählt aus der Gruppe, bestehend aus cyclischen Anhydriden von Dicarbonsäuren und gegebenenfalls einer Verbindung (v), ausgewählt aus der Gruppe, bestehend aus cyclischen Mono- oder Diestern, enthält.

2. Polyurethanklebstoff nach Anspruch 1, **dadurch gekennzeichnet, dass** die Alkoxylierung der Mischung aus Ricinusöl oder Ricinolsäure (i), einem aromatischen Di- oder Polyol (ii) und einer OH-funktionellen Verbindung mit aliphatisch gebundenen OH-Gruppen und einer OH-Funktionalität von 1 bis 8 (iii) sowie gegebenenfalls einer Verbindung (iv), ausgewählt aus der Gruppe, bestehend aus cyclischen Anhydriden von Dicarbonsäuren und gegebenenfalls einer Verbindung (v), ausgewählt aus der Gruppe, bestehend aus cyclischen Mono- oder Diestern mit Hilfe eines nucleophilen und/oder basischen Katalysators und mindestens einem Alkylenoxid erfolgt.

3. Polyurethanklebstoff nach Anspruch 1 oder 2, **dadurch gekennzeichnet, dass** das Alkylenoxid Propylenoxyd enthält.

4. Polyurethanklebstoff nach einem der Ansprüche 1 bis 3, **dadurch gekennzeichnet, dass** das aromatische Diol zwei Phenolgruppen enthält.

5. Polyurethanklebstoff nach Anspruch 4, **dadurch gekennzeichnet, dass** das aromatische Diol mindestens ein Bisphenol enthält.

6. Polyurethanklebstoff nach einem der Ansprüche 1 bis 5, **dadurch gekennzeichnet, dass** die OH-funktionellen Verbindung (iii) 5 bis 8 OH-Gruppen aufweist.

7. Polyurethanklebstoff nach einem der Ansprüche 1 bis 6, **dadurch gekennzeichnet, dass** die Isocyanatkomponente A eine Mischung aus monomerem Diphenylmethandiisocyanat und höherkernigem Diphenylmethandiisocyanat enthält.

8. Polyurethanklebstoff nach einem der Ansprüche 1 bis 7, **dadurch gekennzeichnet, dass** das Alkoxylierungsprodukt einer Mischung aus Ricinusöl oder Ricinolsäure (vorzugsweise Ricinusöl) (i), einem aromatischen Di- oder Polyol (ii) und einer OH-funktionellen Verbindung mit aliphatisch gebundenen OH-Gruppen und einer OH-Funktionalität von 1 bis 8 (iii) sowie gegebenenfalls einer Verbindung (iv), ausgewählt aus der Gruppe, bestehend aus cyclischen Anhydriden von Dicarbonsäuren und gegebenenfalls einer Verbindung (v), ausgewählt aus der Gruppe, bestehend aus cyclischen Mono- oder Diestern eine OH-Zahl im Bereich von 80 bis 800 aufweist.

9. Polyurethanklebstoff nach einem der Ansprüche 1 bis 8, **dadurch gekennzeichnet, dass** der Anteil von Ricinusöl oder Ricinolsäure (vorzugsweise Ricinusöl) (i) 30 bis 80 Gew.- %, einem aromatischen Di- oder Polyol (ii) 4 bis 25 Gew.-% und einer OH-funktionellen Verbindung mit aliphatisch gebundenen OH-Gruppen und einer OH-Funktionalität von 1 bis 8 (iii)10 bis 40 Gew.-% sowie gegebenenfalls einer Verbindung (iv), ausgewählt aus der Gruppe, bestehend aus cyclischen Anhydriden von Dicarbonsäuren 0 bis 30 Gew:- % und gegebenenfalls einer Verbindung (v), ausgewählt aus der Gruppe, bestehend aus cyclischen Mono- oder Diestern 0 bis 30 Gew.-%, jeweils bezogen auf das Gesamtgewicht der Komponenten (i) bis (v), beträgt.

10. Verfahren zum Verkleben umfassend die Schritte
- Mischen der Isocyanatkomponente A und der Polyolkomponente B eines Polyurethanklebstoffs nach einem der Ansprüche 1 bis 9,
- Applizieren des gemischten Polyurethanklebstoffs auf mindestens eine zu verklebende Substratoberfläche,
- Fügen innerhalb der offenen Zeit und
- Aushärten des Polyurethanklebstoffs.

11. Verfahren nach Anspruch 10, **dadurch gekennzeichnet, dass** das mindestens eine zu verklebende Substratoberfläche ein Kunststoff ist.

12. Verklebter Artikel, erhältlich nach einem Verfahren gemäß Anspruch 10 oder 11.

13. Verwendung eines gemäß Anspruch 12 verklebten Artikels für den Bau von Windkraftanlagen.

## Claims

1. A polyurethane adhesive comprising an isocyanate component A and a polyol component B where the isocyanate component A comprises at least one diisocyanate or polyisocyanate and the polyol component B comprises the alkoxylation product of a mixture of castor oil or ricinoleic acid (i), of an aromatic di- or polyol (ii), and of an OH-functional compound having aliphatically bonded OH groups and OH-functionality of from 1 to 8 (iii), and also optionally of a compound (iv), selected from the group consisting of cyclic anhydrides of dicarboxylic acids, and optionally of a compound (v) selected from the group consisting of cyclic mono- or diesters.

2. The polyurethane adhesive according to claim 1, wherein the alkoxylation of the mixture of castor oil or ricinoleic acid (i), of an aromatic di- or polyol (ii), and of an OH-functional compound having aliphatically bonded OH groups and OH-functionality of from 1 to 8 (iii), and also optionally of a compound (iv), selected from the group consisting of cyclic anhydrides of dicarboxylic acids, and optionally of a compound (v) selected from the group consisting of cyclic mono- or diesters is achieved with the aid of a nucleophilic and/or basic catalyst and of at least one alkylene oxide.

3. The polyurethane adhesive according to claim 1 or 2, wherein the alkylene oxide comprises propylene oxide.

4. The polyurethane adhesive according to any of claims 1 to 3, wherein the aromatic diol comprises two phenol groups.

5. The polyurethane adhesive according to claim 4, wherein the aromatic diol comprises at least one bisphenol.

6. The polyurethane adhesive according to any of claims 1 to 5, wherein the OH-functional compound (iii) has from 5 to 8 OH groups.

7. The polyurethane adhesive according to any of claims 1 to 6, wherein the isocyanate component A comprises a mixture of monomeric diphenylmethane diisocyanate and of diphenylmethane diisocyanate having a larger number of rings.

8. The polyurethane adhesive according to any of claims 1 to 7, wherein the OH number of the alkoxylation product of a mixture of castor oil or ricinoleic acid (preferably castor oil) (i), of an aromatic di- or polyol (ii), and of an OH-functional compound having aliphatically bonded OH groups and OH-functionality of from 1 to 8 (iii), and also optionally of a compound (iv), selected from the group consisting of cyclic anhydrides of dicarboxylic acids, and optionally of a compound (v) selected from the group consisting of cyclic mono- or diesters is in the range from 80 to 800.

9. The polyurethane adhesive according to any of claims 1 to 8, wherein the proportion of castor oil or ricinoleic acid (preferably castor oil) (i) is from 30 to 80% by weight, the proportion of an aromatic di- or polyol (ii) is from 4 to 25% by weight, and the proportion of an OH-functional compound having aliphatically bonded OH groups and OH-functionality of from 1 to 8 (iii) is from 10 to 40% by weight, and the proportion of an optional compound (iv) selected from the group consisting of cyclic anhydrides of dicarboxylic acids is from 0 to 30% by weight, and the proportion of an optional compound (v) selected from the group consisting of cyclic mono- or diesters is from 0 to 30% by weight, based in each case on the total weight of components (i) to (v).

10. A process for adhesive bonding comprising the following steps:
- mixing of the isocyanate component A and of the polyol component B of a polyurethane adhesive according to any of claims 1 to 9,
- application of the mixed polyurethane adhesive to at least one substrate surface requiring adhesive bonding,
- formation of a joint within the open time, and
- hardening of the polyurethane adhesive.

11. The process according to claim 10, wherein the at least one substrate surface requiring adhesive bonding is a plastic.

12. An adhesive-bonded item obtainable by a process according to claim 10 or 11.

13. The use of an adhesive-bonded item according to claim 12 for the construction of wind turbines.

## Revendications

1. Adhésif à base de polyuréthane contenant un composant isocyanate A et un composant polyol B, le composant isocyanate A contenant au moins un diisocyanate ou un polyisocyanate et le composant polyol B contenant le produit d'alcoxylation d'un mélange d'huile de ricin ou d'acide ricinoléique (i), d'un di- ou polyol aromatique (ii) et d'un composé à fonction OH contenant des groupes OH reliés aliphatiquement et présentant une fonctionnalité OH de 1 à 8 (iii), ainsi qu'éventuellement d'un composé (iv), choisi dans le groupe constitué par les anhydrides cycliques d'acides dicarboxyliques, et éventuellement d'un composé (v), choisi dans le groupe constitué par les mono- ou diesters cycliques.

2. Adhésif à base de polyuréthane selon la revendication 1, **caractérisé en ce que** l'alcoxylation du mélange d'huile de ricin ou d'acide ricinoléique (i), d'un di- ou polyol aromatique (ii) et d'un composé à fonction OH contenant des groupes OH reliés aliphatiquement et présentant une fonctionnalité OH de 1 à 8 (iii), ainsi qu'éventuellement d'un composé (iv), choisi dans le groupe constitué par les anhydrides cycliques d'acides dicarboxyliques, et éventuellement d'un composé (v), choisi dans le groupe constitué par les mono- ou diesters cycliques, a lieu à l'aide d'un catalyseur nucléophile et/ou basique et d'au moins un oxyde d'alkylène.

3. Adhésif à base de polyuréthane selon la revendication 1 ou 2, **caractérisé en ce que** l'oxyde d'alkylène contient de l'oxyde de propylène.

4. Adhésif à base de polyuréthane selon l'une quelconque des revendications 1 à 3, **caractérisé en ce que** le diol aromatique contient deux groupes phénol.

5. Adhésif à base de polyuréthane selon la revendication 4, **caractérisé en ce que** le diol aromatique contient au moins un bisphénol.

6. Adhésif à base de polyuréthane selon l'une quelconque des revendications 1 à 5, **caractérisé en ce que** le composé à fonction OH (iii) comprend 5 à 8 groupes OH.

7. Adhésif à base de polyuréthane selon l'une quelconque des revendications 1 à 6, **caractérisé en ce que** le composant isocyanate A contient un mélange de diisocyanate de diphénylméthane monomère et de diisocyanate de diphénylméthane à nombre de noyaux plus élevé.

8. Adhésif à base de polyuréthane selon l'une quelconque des revendications 1 à 7, **caractérisé en ce que** le produit d'alcoxylation d'un mélange d'huile de ricin ou d'acide ricinoléique (de préférence d'huile de ricin) (i), d'un di- ou polyol aromatique (ii) et d'un composé à fonction OH contenant des groupes OH reliés aliphatiquement et présentant une fonctionnalité OH de 1 à 8 (iii), ainsi qu'éventuellement d'un composé (iv), choisi dans le groupe constitué par les anhydrides cycliques d'acides dicarboxyliques, et éventuellement d'un composé (v), choisi dans le groupe constitué par les mono- ou diesters cycliques, présente un indice OH dans la plage allant de 80 à 800.

9. Adhésif à base de polyuréthane selon l'une quelconque des revendications 1 à 8, **caractérisé en ce que** la proportion d'huile de ricin ou d'acide ricinoléique (de préférence d'huile de ricin) (i) est de 30 à 80 % en poids, la proportion d'un di- ou polyol aromatique (ii) est de 4 à 25 % en poids et la proportion d'un composé à fonction OH contenant des groupes OH reliés aliphatiquement et présentant une fonctionnalité OH de 1 à 8 (iii) est de 10 à 40 % en poids, et la proportion d'un composé (iv), choisi dans le groupe constitué par les anhydrides cycliques d'acides dicarboxyliques, est éventuellement de 0 à 30 % en poids, et la proportion d'un composé (v), choisi dans le groupe constitué par les mono- ou diesters cycliques, est éventuellement de 0 à 30 % en poids, à chaque fois par rapport au poids total des composants (i) à (v).

10. Procédé de collage comprenant les étapes suivantes :
- le mélange du composant isocyanate A et du composant polyol B d'un adhésif à base de polyuréthane selon l'une quelconque des revendications 1 à 9,
- l'application de l'adhésif à base de polyuréthane mélangé sur au moins une surface de substrat à coller,
- l'assemblage pendant le temps ouvert, et
- le durcissement de l'adhésif à base de polyuréthane.

11. Procédé selon la revendication 10, **caractérisé en ce que** ladite au moins une surface de substrat à coller est une matière plastique.

12. Article collé, pouvant être obtenu par un procédé selon la revendication 10 ou 11.

13. Utilisation d'un article collé selon la revendication 12 pour la construction d'installations éoliennes.
